# EUROPÄISCHE PATENTSCHRIFT

(11) **EP 3 492 164 B1**
(45) Veröffentlichungstag und Bekanntmachung des Hinweises auf die Patenterteilung: **02.11.2022**
(21) Anmeldenummer: 18207553.1
(22) Anmeldetag: 21.11.2018
(51) Int. Cl.: B01F 27/172, B01F 27/808, B01F 27/96, B01F 35/53, B02C 18/06, A47J 43/07, B26D 1/00

(54) **TOPFMIXER MIT MIXER-MESSER**
POT MIXER WITH MIXER CUTTER
MÉLANGEUR DE POTS AVEC COUTEAU MÉLANGEUR

(30) Priorität: 27.11.2017 DE 102017221194
(43) Veröffentlichungstag der Anmeldung: 05.06.2019
(73) Patentinhaber: BSH Hausgeräte GmbH, 81739 München (DE)
(72) Erfinder: Enci, David, 3331 Nazarje (SI); Potocnik, David, 3214 Zrece (SI); Berzelak, Matej, 3334 Luce (SI)

(56) Entgegenhaltungen:
- EP-A1- 0 799 593
- EP-A1- 1 614 352
- WO-A1-2016/188898
- DE-C- 928 424
- US-A- 1 868 113
- US-A1- 2014 231 566
- US-A1- 2016 316 971
- US-A1- 2017 267 323
- US-B1- 6 364 614
- US-B1- 6 532 863

## Beschreibung

### Gebiet der Erfindung

Die Erfindung betrifft ein als Topfmixer ausgebildeter Haushaltsmixer, in welchem ein rotierendes Mixermesser um eine am Boden des Topfmixers angeordnete vertikale Achse rotiert und dabei das im Topf des Topfmixers befindliche Mixgut vermischt und/oder zerkleinert.

### Hintergrund der Erfindung

Haushaltsmixer zur häuslichen Herstellung von Michshakes, zur Zerkleinerung von Gemüse und zur Herstellung von Frucht- oder Gemüsepüree (Smoothies) sind in der Regel als Topfmixer aufgebaut. In diesen Topfmixern ist ein krugähnliches Gefäß am Boden mit einem rotierenden Sternmesser ausgestattet, wobei das rotierende Sternmesser über eine Kupplungsvorrichtung mit einem motorischen Antrieb unterhalb des krugähnlichen Gefäßes lösbar verbunden ist.

Um das Mixgut intensiv zu mischen und zu zerkleinern, ist es in der Regel vorgesehen, das Messer mit einer Propellerwirkung auszustatten. Dabei wirkt die Propellerwirkung auf das Mixgut und befördert es im bestimmungsgemäßen Gebrauch des Topfmixers nach unten, nämlich unterhalb des Sternmessers. Dabei entsteht eine gleichmäßige Strömung des Mixguts von unterhalb des Sternmessers an der Topfwand nach oben, wo es sich mit dem in den als Propeller wirkenden Sternmesser fließenden Mixgut vermischt. Bei der Rotation des Sternmessers mit Umdrehungsgeschwindigkeiten von oberhalb 800 Umdrehungen pro Minute wird an dem Sternmesser vorbeifließendes Mixgut zerkleinert. Die Propellerwirkung des rotierenden Sternmessers sollte dabei nicht zu groß sein, weil das Mixgut nur langsam durch das rotierende Sternmesser fließen soll. Fließt das Mixgut langsam, so erfordert der Mixvorgang eine längere Zeit, bis sämtliches Mixgut gleichmäßig zerkleinert ist. In diesem Fall ist die Zerkleinerungsleistung hoch, jedoch die Mischgeschwindigkeit gering. Ist die Propellerwirkung jedoch größer, so überwiegt die Mischbewegung, nicht jedoch die Zerkleinerungsleistung. Ein optimales Verhältnis zwischen Misch- und Zerkleinerungsgeschwindigkeit ist abhängig von dem zu zerkleinernden Gut. Zum Zerkleinern von Eis wird man eine hohe Mischgeschwindigkeit wählen, um das Eis nicht durch die mechanische Beanspruchung zum Schmelzen zu bringen. Zur Herstellung von Gemüsepüree wird man jedoch in der Regel den Vorzug der Zerkleinerungsleistung geben, um zu vermeiden, dass im Mixgut nach dem Mixen faserige Bestandteile vorhanden sind.

Ein weiterer Aspekt ist die Neigung des rotierenden Messers zur Kavitation. An einem Messerflügel, der auch eine Propellerwirkung hat, entsteht an der Abrisskante des sich bewegenden Messers ein sehr stark ausgeprägter Drucksprung. Durch den Drucksprung wird Wasser in dem Mixgut kurzzeitig unterhalb des Dampfdrucks (etwa 14 Torr oder 19 hPa bei Standardbedingungen) gebracht. Dadurch bildet sich eine NiederdruckDampfblase aus. Bei Passage der Abrisskante wird die Niederdruckdampfblase wieder komprimiert, so dass die Dampfblase kugelsymmetrisch implodiert. Dieser Effekt, auch Kavitation genannt, ist bei jeder Art von Propeller in wässrigen Medien zu beobachten. Die Wirkung der Kavitation ist so stark, dass selbst harte Stähle an der Oberfläche mechanisch erodieren. Des Weiteren entsteht durch Kavitation ein Mikroschaum, der dazu führt, das Gemüse und Fruchtpurees, Smoothies, durch das Mixen eine unerwünschte Aufhellung und Verblassung erfahren, weil der weiße Mikroschaum die intensive Gemüse- oder Fruchtfarbe verblasst. Als Folge sieht ein farbiger Smoothie in der Regel blass und daher weniger appetitlich aus, wenn dieser frisch gemixt ist.

In der deutschen Übersetzung DE 603 13 681 T2 der Europäischen Patentschrift EP 1 329 182 B2 wird ein rotierendes Messer für ein Gerät zum Herstellen von Nahrungsmitteln offenbart. Das rotierende Messer weist mehrere einflügelige Messer auf, die auf einer Achse vertikal übereinander angeordnet sind. Die einzelnen Messerflügel werden durch eine sechseckige Ausnehmung von der Achse motorisch angetrieben. Um den Flüssigkeitsstrom durch das rotierende Messer zu erhöhen, ist vorgesehen, dass die Messerflügel eine Aussparung in der Klinge wie ein Käsemesser aufweisen. Diese Aussparung führt aber zu einer starken Kavitation, wie es nach der Lehre des Propellerbaus zu erwarten ist. Die Strömung durch den Propeller wird zwar erhöht, die unerwünschte Mikroschaumbildung wird dadurch aber verstärkt.

Das Schweizer Patent CH 337 313 offenbart ein gattungsgemäßes Mixer-Messer, in welchem zwei im rechten Winkel auf einer Achse zueinander versetzte und trapezförmig gebogene Messerklingen angeordnet sind. Dieses Messer hat sich für eine Vielzahl von Haushaltsmixern verbreitet. Auch dieses Mixer-Messer ist nicht frei von Kavitation, die im Wesentlichen an dem Außenumfang des rotierenden Messers stattfindet.

In dem Europäischen Patent EP 1 711 252 B1 wird ein sehr einfach herzustellendes Mixer-Messer offenbart, das an jedem Messerflügel zwei abgekantete Bereiche aufweist. Ein Bereich ist jeweils zur Klinge geschärft und ein Bereich wirkt als sehr einfaches Flügelprofil. Im Ergebnis ist das Mixer-Messer für eine Vielzahl von Mixern einsatzfähig. Aber auch dies zeigt am Außenumfang Kavitation. Des Weiteren ist die notwenige Umlaufzahl, also die Anzahl der Umwälzungen des Mixgutes im Topfmixer recht hoch, weil die kleinen Klingen nicht bei jeder Umwälzung das gesamte Mixgut zerkleinern. Diese kleineren Klingen eignen sich gut zum Zerkleinern von Eis.

Die Europäischen Patentschrift EP 1 034 731 B1 beschreibt eine Weiterentwicklung des Messers aus der EP 1 329 182 B2. Zur Vermeidung von Unwuchten weist das einflügelige Messer ein Kontergewicht oder Ausgleichgewicht auf, um die Unwucht des einflügeligen Messers zu verringern. Für eine bessere Zerkleinerungswirkung ist das einflügelige Messer gebogen.

In der Europäischen Patentschrift EP 0 805 641 B1 wird ein dort nach Art eines Blütenkelch genannte Messerklingenform offenbart, wobei die einzelnen Messer-flügel durch Vertikalschnitte in dem topfförmigen oder blütenkelchartigen Mixer-Messer voneinander getrennt sind.

Ein weiteres Mixermesser ist in der US 2014/0231566 A1 offenbart. Das Messer umfasst zwei oder mehr Schlaufen, welche bogenförmig entlang der Messerachse verlaufen. Folglich kann die Bearbeitung des Mixgutes verbessert werden.

Schließlich ist in der internationalen Patentanmeldung WO 01/02742 A2 ein Schlaufenpropeller offenbart. Dieser Propeller zur Nutzung in Gasturbinen oder in Ventilatoren zeichnet sich eine hohe Laufruhe aus. In einem Schlaufenpropeller sind die Propellerflügel oder Propellerflunken nicht sich radial erstreckende Flügel mit einem radialen Ende, an dem die Kavitation entsteht, sondern geschlossene Schlaufen, die in ihrer Formgebung an ein Möbiusband erinnern, das einseitig tangential an einer Propellerachse befestigt ist. Es existiert zwar ein radiales Maximum der Schlaufe, nicht jedoch ein radiales Ende, an dem ein Drucksprung herrscht. Dadurch dass keine Flügelenden vorhanden sind, bilden sich im Gas-raum keine Wirbelschleppen, die bei Rotation durch einen folgenden Propeller-flügel durchschlagen werden, was zum typischen Propellerknattern führt.

EP 0 799 593 A1 offenbart ein Rührwerkzeug, das geeignet ist, das zu mischende Gut auch zu zerteilen.

### Der Erfindung zugrundeliegende Aufgabe

Der Erfindung liegt die Aufgabe zugrunde, ein verbessertes Mixer-Messer zur Verfügung zu stellen. Insbesondere ist es eine Aufgabe der Erfindung, ein Mixer-Messer zur Verfügung zu stellen, dessen Zerkleinerungsleistung gegenüber bekannten Mixer-Messern erhöht ist. und der weniger das Mixgut verblassenden Mikroschaum durch Kavitation erzeugt.

### Erfindungsgemäße Lösung

Die Bezugszeichen in sämtlichen Ansprüchen haben keine einschränkende Wirkung, sondern sollen lediglich deren Lesbarkeit verbessern.

Die der Erfindung zugrunde liegende Aufgabe wird durch einen als Topfmixer ausgebildeten Haushaltmixer entsprechend Anspruch 1 gelöst.

Nach dem Gedanken der Erfindung ist also vorgesehen, dass das Mixermesser nicht als typisches Sternmesser ausgebildet ist, mit jeweils einem Flügel in die Richtung von Ausläufern eines Sterns in radialer Richtung. Es ist vielmehr vorgesehen, dass das Mixer-Messer aus einzelnen Schlaufen besteht. Denn überraschender Weise hat sich herausgestellt, dass ein als Schlaufenpropeller ausgebildetes Mixer-Messer zu weniger Mikroschaumbildung neigt und gelichzeitig das Mixgut effizienter zerkleinert. Die Schlaufen umschließen bei der Rotation einen gedachten Torus mit einem nicht unbedingt kreisrunden Profil der Rotationsfläche. Das Profil der Rotationsfläche bei Rotation umschlossenen Torus kann auch andersartig geformt sein. Diese Formgebung erlaubt eine Vielzahl von Funktionen und technischen Wirkungen die in das Mixer-Messer eingebracht werden können.

Im Sinne der vorliegenden Erfindung ist ein Mixer-Messer ein für die Verwendung in einem Mixer geeignetes Messer. Der Mixer ist ein Topfmixer, das heißt, der Mixer weist ein topfartiges Gefäß auf, in das das Mixgut eingefüllt werden kann. Der bevorzugte Topfmixer ist ein Standmixer. Der Standmixer kann in einer Ausführung der Erfindung zu einer Küchenmaschine, z. B. einer Universalküchenmaschine weiterentwickelt sein. Ein Standmixer weist einen Topf auf, in den auf der beim gewöhnlichen Gebrauch untere Seite das Mixer-Messer als Werkzeug zum Zerkleinern und Vermischen des Mixguts hineinragt. Das Werkzeug weist eine Welle auf, über die es von einem Motor des Mixers rotierend angetrieben werden kann. Der Motor befindet sich in der Regel in einem Sockel des Standmixers, auf den das Topf aufgesetzt wird. Der Topf ist in der Regel aus einem transparenten Material, besonders vorzugsweise Glas.

### Bevorzugte Ausgestaltungen der Erfindung

Vorteilhafte Aus- und Weiterbildungen, welche einzeln oder in Kombination miteinander eingesetzt werden können, sind Gegenstand der abhängigen Ansprüche und der nachfolgenden Beschreibung.

In einer ersten Ausgestaltung der Erfindung kann vorgesehen sein, dass jeweils zwei miteinander verbundene Messerflügel eines auf der vertikalen Achse oberen Messerflügels und eines auf der vertikalen Achse unteren Messerflügels eine Schlaufe des als Schlaufenpropeller ausgebildeten Mixer-Messers bilden. Danach ist also vorgesehen, zwei übereinander angeordnete Sternmesser so zu verändern dass diese mit den radialen Enden verbunden sind. Durch diesen Aufbau lässt sich das erfindungsgemäße Messer durch Verformung zweier ausgestanzter Sternmesser herstellen, in dem die radialen Enden der beiden verformten Sternmesser miteinander verlötet oder verschweißt werden. Bei einer Herstellung aus Kunststoff können so zwei Formteile miteinander durch Anschmelzen miteinander verbunden werden.

Die Verformung der radialen Enden der Sternmesser zur Herstellung des erfindungsgemäßen Mixer-Messers kann vorsehen, dass das der obere Messerflügel eines Sternmessers eine Abwärtskrümmung aufweist und dass der untere Messerflügel eines Sternmessers eine Aufwärtskrümmung aufweist. Eine Krümmung gegenüber einem Knick hat den Vorteil, dass im Flügelprofil des Mixer-Messers keine Abrisskanten entstehen, an denen sich Mixgut sammeln kann, das mit dem Messer rotiert und nicht zerkleinert wird oder an dem Mikroschaumbildung stattfindet.

Die radialen Enden der Sternmesser, aus dem das erfindungsgemäße Mixer-Messer besteht, können unmittelbar miteinander verbunden sein oder aber die Sternmesser sind auf der gemeinsamen Rotationsachse verdreht gegeneinander angeordnet. Dazu können die radialen Enden der Sternmesser über eine Brücke verbunden sein. Es kann also vorgesehen sein, dass der obere Messerflügel eines Sternmessers und der untere Messerflügel eines Sternmessers jeweils Teil eines oberen rotierenden Sternmessers und unteren rotierenden Sternmessers mit zwei oder mehr Messerflügeln ist, wobei die verbundenen Messerflügel je über eine Brücke miteinander verbunden sind. Diese Brücke zwischen den radialen Enden kann Mixgut gegen innere Rippen im Topf des Topfmixers drücken und so durch Scherung zerkleinern.

Bei der Anordnung des oberen Sternmessers und des unteren Sternmessers können diese auf der gemeinsamen Achse verdreht angeordnet sein, so dass sich bei der Rotation des erfindungsgemäßen Mixer-Messers ein Phasenversatz ausbildet. Dazu kann vorgesehen sein, dass das obere Sternmesser und das untere Sternmesser zwischen 5° und 90° auf der vertikalen Achse gegeneinander verdreht sind, wobei der ideale Phasenversatz von der Zähligkeit des Sternmessers abhängt. Ein Paar zweier zweizähliger Sternmesser kann bis zu 90° Phasenversatz zwischen beiden Sternmesser aufweisen. Ein Paar zweier zweizähliger Sternmesser kann bis zu 60° Phasenversatz zwischen beiden Sternmessern aufweisen. Ein Paar zweier vierzähliger Sternmesser kann bis zu 45° Phasenversatz zwischen beiden Sternmesser aufweisen. Das Mixermesser kann eine zweizählige, dreizählige oder vierzählige Rotationssymmetrie aufweisen. Bei diesen Angaben zum Phasenversatz handelt es sich um maximale Phasenversatzangaben. Es ist auch möglich, dass die oberen und unteren Messer einen geringeren Phasenversatz zeigen.

Das als Schlaufenpropeller ausgebildete Mixer-Messer weist eine in Umlaufrichtung weisende Kante des rotierenden Mixer-Messers auf, die eine Messerklinge trägt.

Das Mixer-Messer kann dadurch in einen Grundkörper und in die Messerklingen aufgeteilt sein. Der Grundkörper kann aus Metall gefertigt sein aber auch aus Kunststoff. Der Aufbau in Form des Schlaufenpropellers erlaubt nämlich einen Aufbau aus Kunststoff, da der Aufbau zu einer sehr hohen Stabilität des Mixer-Messers führt. Dies führt nicht nur zu geringeren Produktionskosten, sondern verringert das Eigengewicht des Mixer-Messers. Das geringere Eigengewicht führt zu einem geringeren Trägheitsmoment, was besonders zum Starten des Mixers besonders wichtig ist, wenn der Antriebsmotor das Mixer-Messer in sehr kurzer Zeit beschleunigt. Das geringere Trägheitsmoment führt zu einem geringeren Schlupf zwischen Rotor und Stator des Antriebsmotors, wodurch bei einem Bürstenmotor geringere Bürstenfeuer entstehen, was die Lebenszeit des Bürstenmotors verlängert und was auch zu weniger typischem Geruch des Motors führt, wenn dieser startet. Gerade bei Haushaltsmaschinen ist der typische Geruch von Bürstenmotoren störend. Bei bürstenlosen Antriebsmotoren entstehen durch den geringeren Schlupf zwischen Rotor und Stator in Bezug zur elektrischen Phase weniger störende Oberwellen, die in das Stromversorgungsnetz geleitet werden und möglicherweise andere empfindliche Strom-verbraucher stören könnten, wie zum Beispiel Fernseher und Computer.

In besonderer Ausgestaltung der Erfindung kann vorgesehen sein, dass der obere Messerflügel und der untere Messerflügel durch ihren Anstellwinkel eine jeweils gegenläufige Propellerwirkung zeigen. Durch diesen Aufbau unterscheidet sich das hier vorgestellte Mixer-Messer von einem Schlaufenpropeller, der aus der Turbinentechnik bekannt ist. Bei Schlaufenpropellern ist man bestrebt, über die gesamte Schlaufe eine gleichmäßige Förderung durch Wahl der Steigung zu wählen, wobei sich die Steigung mit dem Abstand vom Rotationszentrum verändert. In der hier vorgestellten Ausgestaltung des Mixermessers sollen aber der obere Messerflügel und der untere Messerflügel durch ihren Anstellwinkel eine jeweils gegenläufige Propellerwirkung zeigen. Dabei ist es vorteilhaft, wenn die netto-Förderwirkung des Mixer-Messers im bestimmungsgemäßen Gebrauch des Topfmixers nach unten gerichtet ist, damit das Mixgut nicht aus dem Topf herausgefördert wird.

Die gegenläufige Propellerwirkung der oberen und unteren Messerflügel bewirkt die Ausbildung einer Rotationswalze des Mixguts innerhalb des durch das als Schlaufenpropeller ausgebildete Mixer-Messer bei Rotation umschlossenen Torus. Diese Rotationswalze führt dazu, dass das Mixgut einen mehrfachen Kontakt mit den oberen und/oder den unteren Messerklingen hat. Pro einzelnem Umlauf des Mixguts erfährt das Mixgut also mehrere Messerkontakte, wodurch eine intensivere Zerkleinerung und Durchmischung des Mixgutes stattfindet. Im Gegensatz zu den eingangs beschriebenen Mixer-Messern aus dem Stand der Technik wird das Mixgut nicht nur einmal pro Messerklingenumlauf an der entsprechenden Messerklinge zerkleinert, sondern mehr als einmal.

Um die Strömung im Bereich des Mixer-Messers zu beeinflussen, ist erfindungsgemäß vorgesehen, dass im Bereich, wo üblicherweise auf einem Propeller ein Propellerspinner angeordnet ist, ein auf der vertikalen Achse angeordneter Teller angeordnet ist, der als Prallplatte zur Strömungsumlenkung dient, wobei der Teller bevorzugt einen Radius von 15 % bis 30 % des Durchmessers des Schlaufenpropellers aufweist. Dieser Teller lenkt im Bereich des Mixer-Messer-Zentrums einen aus dem Mixer-Messer nach oben strömenden Mixgut-Strom wieder zum Mixer-Messer zurück, so dass ein weiterer Messerklingenkontakt beim Mixgut pro Umlauf entsteht. Des Weiteren wird verhindert, dass zum Beispiel eine beim Mixen in das Mixgut eingeschobene Gurke oder eine längliche Frucht Kontakt mit der Mixer-Messer-Mitte erhält, wo die Gurke oder die längliche Frucht in starke Rotation um die eigen Längsachse getrieben würde und dem Nutzer so aus der Hand gleitet. Schließlich eignet sich der Teller als Griff, in dem dieser mit dem Zeigefinger und mit dem Mittelfinger hintergriffen werden kann. Auf diese Weise lässt sich das Mixer-Messer ohne Kontakt mit den Messerklingen gefahrlos greifen.

In weiterer, besonderer Ausgestaltung des Mixer-Messers kann vorgesehen sein, dass der Teller mit einem Bohrfutter zur Befestigung des Mixermessers auf der vertikalen Achse verbunden ist, wobei der Teller einen zentralen Druckknopf zum Entriegeln des Bohrfutters aufweist, so dass der Teller mit Zeigefinger und Mittelfinger hintergreifbar ist und durch Druck mit dem Daumen auf den Druckknopf das Bohrfutter entriegelt ist und sich das Mixermesser von der vertikalen Achse abheben lässt. Dieser Entriegelmechanismus ist besonders dann von Vorteil, wenn das Mixer-Messer nahezu den Durchmesser des Topfes in einem Topfmixer ausfüllt und so eine Schraubverbindung unterhalb des Mixer-Messers unerreichbar machen würde.

Der im Vergleich zu Mixer-Messern große Umfang im Verhältnis zum Innendurchmesser ermöglicht, dass die eingangs erwähnte Brücke Mixgut zwischen der Brücke und im Topf des Mixers angeordnete Rippen durch Scherung zerkleinert. Für diese zusätzliche Scher-Zerkleinerung kann vorgesehen sein, dass die Außenkante der Messerflügel im Profil bei Blick entlang der vertikalen Achse eine Kreissektion bildet. Diese Kreissektion ändert ihren Abstand nicht zu in dem Topf vorhandenen Rippen, so dass die Scherung über eine gewisse Zeit lang über einen Umlauf geschieht. Um das Mixer-Messer leichter handhabbar zu machen, kann des Weiteren vorgesehen sein, dass die Außenkante der Messerflügel im Profil bei Blick entlang der vertikalen Achse stumpf ist. Dadurch kann das Mixer-Messer beim Reinigen in einer Haushaltsküche keinen Schaden durch Schnitte erzeugen.

Um die Herstellung des Mixer-Messers besonders einfach zu gestalten, kann vorgesehen sein, dass die Sternmesser das als Schlaufenpropeller ausgestalteten Mixer-Messer, soweit es die Schlaufenpropeller-Geometrie aufweist, eine zweizählige, dreizählige oder vierzählige Drehspiegelachse aufweisen, die kollinear zur vertikalen Achse ausgerichtet ist. Eine Drehspiegelachse ist hier im mathematischen Sinne gemeint und besagt, dass bei einer zweizähligen Drehspiegelachse der Propeller um 180° gedreht wird (180° ist "zweizählig" weil es zweimal in 360°, eine Umdrehung, hineinpasst). Nach der Drehung wird das Sternmesser an der Ebene senkrecht zur Drehspiegelebene gespiegelt. Dieser Aufbau hat zur Folge, dass ein Sternmesser als Ausgangsrohling gestanzt wird. Dieses wird sodann verformt, um die Krümmung zu erzeugen. Zwei solche Messer werden verkehrt zueinander auf eine gemeinsame zentrale Achse gelegt und die Ausläufer des Sternmessers werden über eine Brücke miteinander verbunden. Um zu verhindern dass nahe des Zentrums des Mixer-Messers ein Ort mit geringer absoluter Geschwindigkeit existiert, kann vorgesehen sein, dass die Nabe des Schlaufenpropellers einen Radius von 15 % bis 30 % des Durchmessers des Schlaufenpropellers aufweist. Dadurch kann sich kein Mixgut im Zentrum des Mixer-Messers sammeln und dort mit geringer absoluter Geschwindigkeit unzerkleinert verweilen.

### Kurzbeschreibung der Zeichnungen

Weitere vorteilhafte Ausgestaltungen werden nachfolgend anhand mehrerer in den Zeichnungen dargestellten Ausführungsbeispielen, auf welche die Erfindung jedoch nicht beschränkt ist, näher beschrieben.

Es zeigt schematisch:
- Figur 1: einen senkrechten Schnitt durch einen gattungsgemäßen Topfmixer, in dem das Mixer-Messer eingesetzt wird, mit darin angeordnetem erfindungsgemäßem Mixer-Messer,
- Figur 2: ein erfindungsgemäßes Mixer-Messer, das auf einer Achse aufgenommen ist, in einer perspektivischen Ansicht,
- Figur 3: das Mixer-Messer aus Figur 2 in einer isometrischen Ansicht von der Seite, und
- Figur 4: das Mixer-Messer aus Figur 2 in einer isometrischen Ansicht von oben mit schraffierten Messern,

### Detaillierte Beschreibung von Ausführungen der Erfindung

Bei der nachfolgenden Beschreibung von bevorzugten Ausführungsformen der vorliegenden Erfindung bezeichnen gleiche Bezugszeichen gleiche oder vergleichbare Komponenten.

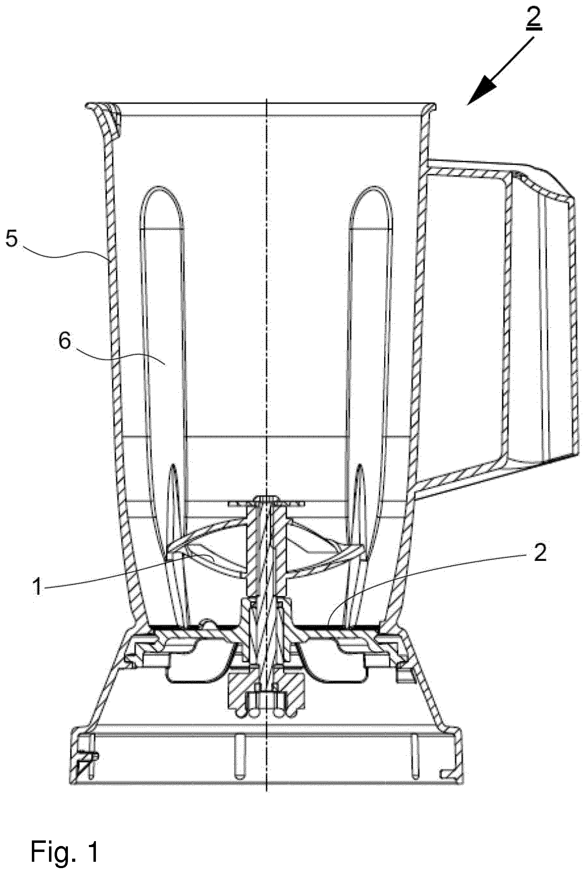

In Figur 1 ist ein senkrechter Schnitt durch einen gattungsgemäßen als Standmixer ausgebildeten Topfmixer 2 dargestellt, in dem das erfindungsgemäße Mixer-Messer 1 eingesetzt wird. Genauer zeigt die Figur den Topf 5 des Mixers mit seinem Fuß. Der beim vorgesehenen Gebrauch darunterstehe, unter anderem einen Motor und Bedienelemente aufweisende Sockel ist in der Figur nicht dargestellt. In dem Topfmixer 2 ist das Mixer-Messer 1 nahe am Boden 3 des Topfes 5 im Topfmixer 2 angeordnet und zerkleinert dort das Mixgut, in dem es durch eine Propellerwirkung des Mixer-Messers 1 von oben nach unten gezogen wird und dabei die Messerklingen am Mixer-Messer 1 passiert. Dazu wird das Mixer-Messer über eine Welle von dem Motor des Sockels rotierend angetrieben.In der Wand des Topfes 5 angeordnete Rippen 6 dienen als stationäre Hindernisse zur Erzeugung einer Scherwirkung zwischen dem umlaufenden Mixer-Messer 1 und den Rippen 6. Das erfindungsgemäße Mixer-Messer 1 wird in den folgenden Figuren näher dargestellt.

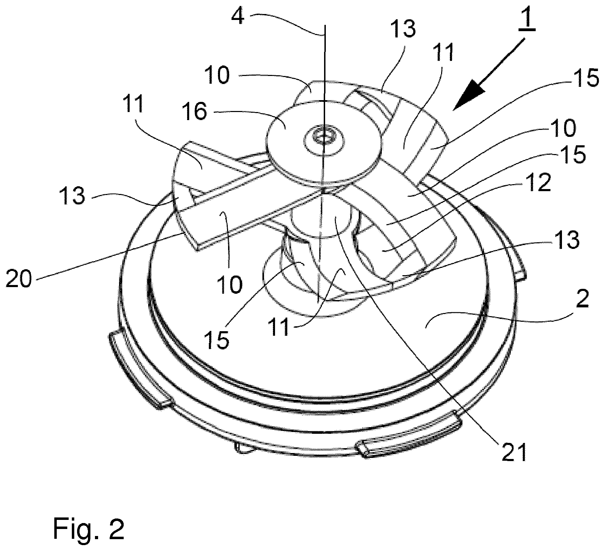

In Figur 2 ist ein erfindungsgemäßes Mixer-Messer 1 dargestellt, das auf einem Boden 3 eines Topfmixers 2 angeordnet ist. Dabei ist der Boden 3 hier nur zur Verdeutlichung des Einsatzes des Mixer-Messers 1 eingezeichnet. Das Mixer-Messer 1 hat eine zentrale vertikale Achse 4, um das sich das Mixer-Messer 1 dreht, angetrieben durch einen Motor im Topfmixer 2. In der hier dargestellten Skizze dreht sich das Mixer-Messer 1 mit einer Linksdrehung im Uhrzeigersinn, so dass die Messerklingen 15 bei der Umdrehung in Fahrtrichtung weisen.

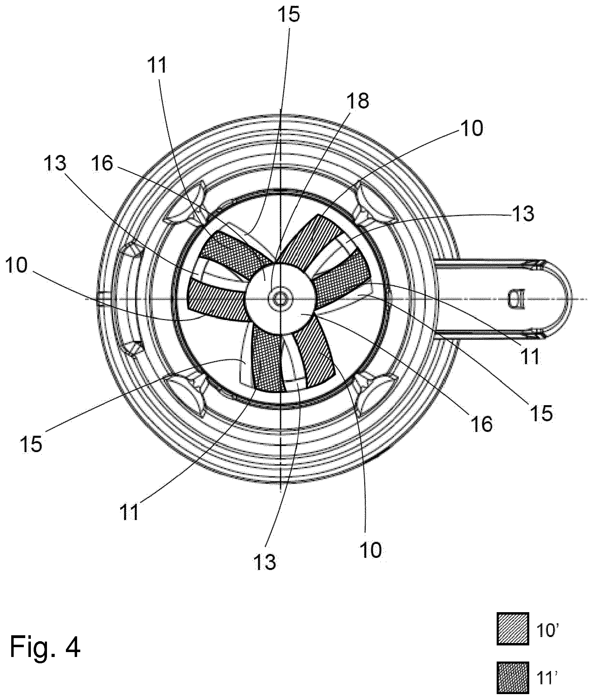

Das Mixer-Messer 1 besteht in der hier dargestellten Ausführungsform aus einem oberen Sternmesser 10' (siehe Figur 4) und einem unteren Sternmesser 11' (sie-he Figur 4). Dabei weist das obere Sternmesser drei Messerflügel 10 auf und as untere Sternmesser 11' weist drei Messerflügel 11 auf. Die Messerflügel 10 des oberen Sternmessers 10' sind gegenüber den Messerflügeln 11 des Sternmessers 11' verdreht angeordnet und weisen so einen Phasenversatz auf. Die Messer 10 des oberen Sternmessers 10' sind über Brücken 13 mit den Messerflügeln 11 des unteren Sternmesser 11' verbunden. Da die Messerflügel 10 des oberen Sternmessers 10' eine Abwärtskrümmung aufweisen und die Messerflügel 11 des unteren Sternmessers 11' eine Aufwärtskrümmung aufweisen, bilden die über die Messerflügel 10 und 11 zusammen mit den Brücken 13 verbundenen Sternmesser 10' und 11' jeweils eine Schlaufe 12. Bei der Rotation des Mixer-Messers 1 umschließt je eine Schlaufe 12 einen gedachten Torus, dessen Rotationsfläche jedoch nicht zwingend ein kreisförmiges Profil haben muss.

Das Profil der Rotationsfläche wird aufgespannt durch die Nabe 21, durch die Krümmung der Messerklingen 10 und 11 und die Lage der Brücke 13. Bei der Rotation des Messer-Mixers 1 entsteht innerhalb des gedachten Torus eine Strömung, die abhängt von der Propellerwirkung der Messerklingen 10 und 11. Haben die Messerklingen 10 und 11 eine gegenläufige Propellerwirkung, mit einem netto-Fördereffekt, der in dieser Ansicht nach unten weist, dann wird Mixgut innerhalb des Torus mehrfach auf und ab transportiert und passiert dabei mehrfach die Messerklingen 15 an den Messerflügeln 10 und 11. Um eine Aufwärtsströmung im Bereich oberhalb der Nabe 21 auf das Mixer-Messer 1 zurück zuleiten, kann ein Teller 16 vorgesehen sein, der das strömende Mixgut auf das Mixer-Messer 1 umleitet.

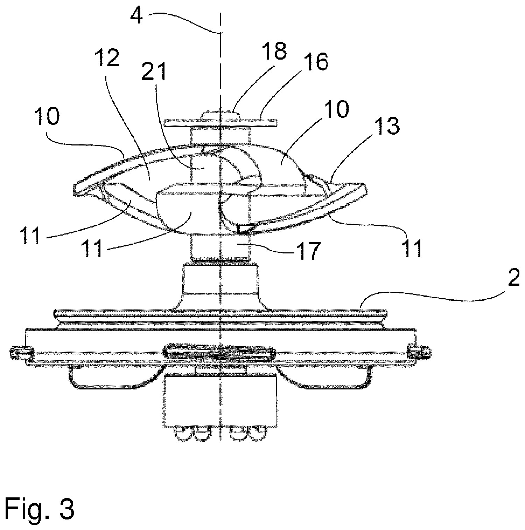

Zur Darstellung des Profils der Rotationsfläche des gedachten Torus ist das Mixer-Messer 1 in Figur 3 durch eine isometrische Ansicht von der Seite dargestellt. Deutlich ist das Profil der Schlaufe 12 als Rotationsfläche zu erkennen, soweit es nicht durch den unteren Messerflügel 11 verdeckt ist. Um das Mixer-Messer 1 greifen zu können, ist vorgesehen, dass man mit dem Zeigefinger und dem Mittelfinger den Teller 18 umgreift und mit dem Daumen auf den Knopf 18 hält. Um das Mixer-Messer 1 von einer zentralen Achse zu lösen, kann vorgesehen sein, dass der Knopf 18 ein Bohrfutter 17 auslöst, so dass sich das Bohrfutter 17 von einer zentralen Achse löst, die mit Achse 4 kollinear ist.

In Figur 4 ist das Mixer-Messer 1 in einer isometrischen Ansicht von oben darge-stellt. Zur Unterscheidung des oberen Sternmessers 10' und des unteren Stern-messers 11' ist das obere Sternmesser 10' mit einer Kreuzschraffur versehen und das untere Sternmesser 11' mit einer Linienschraffur, wie es in der links stehen-den Schraffurlegende gezeigt ist. Die Sternmesser 10' und 11' sind jeweils über Brücken 13 miteinander verbunden. Je nach Herstellungsverfahren kann das Mixer-Messer einteilig gegossen sein, oder aber aus zwei Sternmessern hergestellt sein, wobei die Sternmesser 10' und 11' nachträglich miteinander verschmolzen, verschweißt oder miteinander verlötet werden. In dieser Ansicht sind die Messer-klingen 15 zu erkennen, die bei einer Linksdrehung (im mathematischen Sinn) um die Achse 4 im Uhrzeigersinn (oder eine Rechtsdrehung im Uhrzeigersinn, wenn man die Rotation als Richtungsänderung auffasst), in Fahrtrichtung weisen und dabei Mixgut zerschneiden.

### Bezugszeichenliste

- 1: Mixer-Messer
- 2: Topfmixer
- 3: Boden
- 4: vertikale Achse
- 5: Topf
- 6: Rippe
- 10: Messerflügel
- 10': Sternmesser
- 11: Messerflügel
- 11': Sternmesser

- 12: Schlaufe
- 13: Brücke
- 15: Messerklinge
- 16: Teller
- 17: Bohrfutter
- 18: Druckknopf

- 20: Außenkante
- 21: Nabe

## Patentansprüche

1. Als Topfmixer (2) ausgebildeter Haushaltsmixer mit einem Mixer-Messer (1), in welchem das rotierende Mixermesser (1) um eine am Boden (3) des Topfmixers (2) angeordnete vertikale Achse (4) rotiert und dabei das im Topf (5) des Topfmixers (2) befindliche Mixgut vermischt und/oder zerkleinert, wobei das Mixermesser (1) als Schlaufenpropeller ausgebildet ist, wobei eine in Umlaufrichtung weisende Kante (14) des rotierenden Mixermessers (1) eine Messerklinge (15) aufweist, wobei im Bereich, wo üblicherweise auf einem Propeller ein Propellerspinner angeordnet ist, ein auf der vertikalen Achse (4) angeordneter Teller (16) angeordnet ist, der als Prallplatte zur Strömungsumlenkung dient, wobei der Teller (16) bevorzugt einen Radius von 15 % bis 30 % des Durchmessers des Schlaufenpropellers aufweist.

2. Als Topfmixer (2) ausgebildeter Haushaltsmixer mit einem Mixer-Messer (1) nach Anspruch 1, **dadurch gekennzeichnet, dass** jeweils zwei miteinander verbundene Messerflügel (10, 11) eines auf der vertikalen Achse (4) oberen Messerflügels (10) und eines auf der vertikalen Achse (4) unteren Messerflügels (11) eine Schlaufe (12) des als Schlaufen-propeller ausgebildeten Mixermessers (1) bilden.

3. Als Topfmixer (2) ausgebildeter Haushaltsmixer mit einem Mixer-Messer (1) nach Anspruch 2, **dadurch gekennzeichnet, dass** das der obere Messerflügel (10) eine Abwärtskrümmung aufweist und dass der untere Messerflügel (11) eine Aufwärtskrümmung aufweist.

4. Als Topfmixer (2) ausgebildeter Haushaltsmixer mit einem Mixer-Messer (1) nach einem der Ansprüche 2 bis 3, **dadurch gekennzeichnet, dass** das der obere Messerflügel (10) und der untere Messerflügel (11) jeweils Teil eines oberen rotierenden Sternmessers (10') und unteren rotierenden Sternmessers (11') mit zwei oder mehr Messerflügeln (10, 11) ist, wobei die verbundenen Messerflügel (10, 11) je über eine Brücke (13) miteinander verbunden sind.

5. Als Topfmixer (2) ausgebildeter Haushaltsmixer mit einem Mixer-Messer (1) nach Anspruch 2, **dadurch gekennzeichnet, dass** das obere Sternmesser (10') und das untere Sternmesser (11') zwischen 5° und 60° auf der vertikalen Achse (4) gegeneinander verdreht sind.

6. Als Topfmixer (2) ausgebildeter Haushaltsmixer mit einem Mixer-Messer (1) nach Anspruch 5, **dadurch gekennzeichnet, dass** außer der Messerklingen (15) das Mixermesser (1) aus Kunststoff gefertigt ist.

7. Als Topfmixer (2) ausgebildeter Haushaltsmixer mit einem Mixer-Messer (1) nach Anspruch 6, **dadurch gekennzeichnet, dass** die Messerklingen (15) vom Mixer-Messer (1) abtrennbar sind.

8. Als Topfmixer (2) ausgebildeter Haushaltsmixer mit einem Mixer-Messer (1) nach einem der Ansprüche 2 bis 7, **dadurch gekennzeichnet, dass** der obere Messerflügel (10) und der untere Messerflügel (11) durch ihren Anstellwinkel eine jeweils gegenläufige Propellerwirkung zeigen.

9. Als Topfmixer (2) ausgebildeter Haushaltsmixer mit einem Mixer-Messer (1) nach Anspruch 1, **dadurch gekennzeichnet, dass** der Teller (16) mit einem Bohrfutter (17) zur Befestigung des Mixermessers (1) auf der vertikalen Achse (4) verbunden ist, wobei der Teller (16) einen zentralen Druckknopf (18) zum Entriegeln des Bohrfutters (17) aufweist, so dass der Teller (16) mit Zeigefinger und Mittelfinger hintergreifbar ist und durch Druck mit dem Daumen auf den Druckknopf (18) das Bohrfutter (17) entriegelt ist und sich das Mixermesser (1) von der vertikalen Achse (4) ab heben lässt.

10. Als Topfmixer (2) ausgebildeter Haushaltsmixer mit einem Mixer-Messer (1) nach einem der vorhergehenden Ansprüche, **dadurch gekennzeichnet, dass** Außenkante (20) der Messerflügel (10, 11) im Profil bei Blick entlang der vertikalen Achse (4) eine Kreissektion bildet.

11. Als Topfmixer (2) ausgebildeter Haushaltsmixer mit einem Mixer-Messer (1) nach einem der vorhergehenden Ansprüche, **dadurch gekennzeichnet, dass** Außenkante (20) der Messerflügel (10, 11) im Profil bei Blick entlang der vertikalen Achse (4) stumpf ist.

12. Als Topfmixer (2) ausgebildeter Haushaltsmixer mit einem Mixer-Messer (1) nach einem der vorhergehenden Ansprüche, **dadurch gekennzeichnet, dass** das Mixermesser (1) eine zweizählige, dreizählige oder vierzählige Rotationssymmetrie aufweist.

13. Als Topfmixer (2) ausgebildeter Haushaltsmixer mit einem Mixer-Messer (1) nach einem der vorhergehenden Ansprüche, **dadurch gekennzeichnet, dass** die Nabe (21) des Schlaufenpropellers einen Radius von 15 % bis 30 % des Durchmessers des Schlaufenpropellers aufweist. Durch die Erfindung ist eine besonders gute Zerkleinerung des Mixguts erreichbar.

## Claims

1. Household mixer embodied as a pot mixer (2) with a mixer knife (1) in which the rotating mixer knife (1) rotates about a vertical axis (4) arranged on the base (3) of the pot mixer (2) and in the process mixes and/or chops the food located in the pot (5) of the pot mixer (2), wherein the mixer knife (1) is embodied as a loop propeller, wherein an edge (14) of the rotating mixer knife (1) which points in the peripheral direction has a knife blade (15), wherein in the region where a propeller spinner is typically arranged on a propeller, a plate (16) arranged on the vertical axis (4) is arranged and is used as a baffle plate for deflecting the flow, wherein the plate (16) preferably has a radius of 15% to 30% of the diameter of the loop propeller.

2. Household mixer embodied as a pot mixer (2) with a mixer knife (1) according to claim 1, **characterised in that** in each case two knife edges (10, 11), which are connected to one another, of an upper knife edge (10) on the vertical axis (4) and a lower knife edge (11) on the vertical axis (4) form a loop (12) of the mixer knife (1) embodied as a loop propeller.

3. Household mixer embodied as a pot mixer (2) with a mixer knife (1) according to claim 2, **characterised in that** the upper knife edge (10) has a downward curvature and that the lower knife edge (11) has an upward curvature.

4. Household mixer embodied as a pot mixer (2) with a mixer knife (1) according to one of claims 2 to 3, **characterised in that** the upper knife edge (1) and the lower knife edge (11) is in each case part of an upper rotating star knife (10') and lower rotating star knife (11') with two or more knife edges (10, 11), wherein the connected knife edges (10, 11) are connected to one another by way of a bridge (13) in each case.

5. Household mixer embodied as a pot mixer (2) with a mixer knife (1) according to claim 2, **characterised in that** the upper star knife (10') and the lower star knife (11') are rotated against one another on the vertical axis (4) between 5° and 60°.

6. Household mixer embodied as a pot mixer (2) with a mixer knife (1) according to claim 5, **characterised in that** in addition to the knife blades (15) the mixer knife (1) is made from plastic.

7. Household mixer embodied as a pot mixer (2) having a mixer knife (1) according to claim 6, **characterised in that** the knife blades (15) can be separated from the mixer knife (1).

8. Household mixer embodied as a pot mixer (2) with a mixer knife (1) according to one of claims 2 to 7, **characterised in that** the upper knife edge (10) and the lower knife edge (11) indicate a respectively opposing propeller effect as a result of their blade angle.

9. Household mixer embodied as a pot mixer (2) with a mixer knife (1) according to claim 1, **characterised in that** the plate (16) is connected to a boring socket (17) for fastening the mixer knife (1) to the vertical axis (4), wherein the plate (16) has a central pushbutton (18) for unlocking the boring socket (17) so that the plate (16) can be engaged behind with the forefinger and middle finger and the boring socket (18) is unlocked by pressing the thumb onto the pushbutton (18) and the mixer knife (1) can be lifted from the vertical axis (4).

10. Household mixer embodied as a pot mixer (2) having a mixer knife (1) according to one of the preceding claims, **characterised in that** in the profile the outer edge (20) of the knife edge (10, 11) forms a circular section when viewed along the vertical axis (4).

11. Household mixer embodied as a pot mixer (2) with a mixer knife (10) according to one of the preceding claims, **characterised in that** in the profile the outer edge (20) of the knife edge (10, 11) is blunt when viewed along the vertical axis (4).

12. Household mixer embodied as a pot mixer (2) with a mixer knife (1) according to one of the preceding claims, **characterised in that** the mixer knife (1) has a twofold, threefold or fourfold rotational symmetry.

13. Household mixer embodied as a pot mixer (2) with a mixer knife (1) according to one of the preceding claims, **characterised in that** the hub (21) of the loop propeller has a radius of 15% to 30% of the diameter of the loop propeller. The food can be chopped particularly well by means of the invention.

## Revendications

1. Mélangeur électroménager comprenant un couteau mélangeur (1) et réalisé en tant que mélangeur en pot (2) dans lequel le couteau mélangeur (1) rotatif tourne autour d'un axe (4) vertical situé au fond (3) du mélangeur en pot (2) et en l'occurrence le produit à mélanger se trouvant dans le pot (5) du mélangeur en pot (2) est mélangé et/ou broyé, dans lequel le couteau mélangeur (1) est réalisé en tant qu'hélice à boucle, dans lequel une arête (14) indiquant le sens du tour du couteau mélangeur (1) rotatif comprend un tranchant de lame (15), dans lequel dans la zone où habituellement se trouve sur une hélice, un fileur d'hélice, un disque (16) est disposé, lequel est situé sur l'axe vertical (4) et sert de plaque déflectrice pour dévier le courant, le disque (16) présentant de préférence un rayon faisant de 15% à 30% du diamètre de l'hélice à boucle.

2. Mélangeur électroménager comprenant un couteau mélangeur (1) et réalisé en tant que mélangeur en pot (2) selon la revendication 1, **caractérisé en ce que**, à chaque fois deux ailes de couteau (10, 11), reliées l'une à l'autre, d'une aile de couteau (10) supérieure sur l'axe vertical (4) et d'une aile de couteau (11) inférieure sur l'axe vertical (4), forment une boucle (12) du couteau mélangeur (1) réalisé en tant qu'hélice à boucle.

3. Mélangeur électroménager comprenant un couteau mélangeur (1) et réalisé en tant que mélangeur en pot (2) selon la revendication 2, **caractérisé en ce que** l'aile de couteau (10) supérieure est incurvée vers le bas et **en ce que** l'aile de couteau (11) inférieure est incurvée vers le haut.

4. Mélangeur électroménager comprenant un couteau mélangeur (1) et réalisé en tant que mélangeur en pot (2) selon l'une des revendications 2 à 3, **caractérisé en ce que** l'aile de couteau (10) supérieure et l'aile de couteau (11) inférieure font à chaque fois partie d'un couteau en étoile (10') supérieur rotatif et d'un couteau en étoile (11') inférieur rotatif comprenant deux ailes de couteau (10, 11) ou plus, les ailes de couteau (10, 11) reliées étant chacune reliées l'une à l'autre par un pont (13).

5. Mélangeur électroménager comprenant un couteau mélangeur (1) et réalisé en tant que mélangeur en pot (2) selon la revendication 2, **caractérisé en ce que** le couteau en étoile (10') supérieur et le couteau en étoile (11') inférieur sont tordus l'un contre l'autre de entre 5° et 60° sur l'axe vertical (4).

6. Mélangeur électroménager comprenant un couteau mélangeur (1) et réalisé en tant que mélangeur en pot (2) selon la revendication 5, **caractérisé en ce qu'**à l'exception des tranchants de lame (15), le couteau mélangeur (1) est fabriqué en matière synthétique.

7. Mélangeur électroménager comprenant un couteau mélangeur (1) et réalisé en tant que mélangeur en pot (2) selon la revendication 6, **caractérisé en ce que** les tranchants de lame (15) peuvent être séparés du couteau mélangeur (1).

8. Mélangeur électroménager comprenant un couteau mélangeur (1) et réalisé en tant que mélangeur en pot (2) selon l'une des revendications 2 à 7, **caractérisé en ce que** l'aile de couteau (10) supérieure et l'aile de couteau (11) inférieure ont, par leur angle d'inclinaison, un effet d'hélices contrarotatives.

9. Mélangeur électroménager comprenant un couteau mélangeur (1) et réalisé en tant que mélangeur en pot (2) selon la revendication 1, **caractérisé en ce que** le disque (16) est raccordé sur l'axe vertical (4) à un mandrin (17) pour la fixation du couteau mélangeur (1), dans lequel le disque (16) comprend un bouton-poussoir (18) central pour le déverrouillage du mandrin (17), de sorte que le disque (16) peut être agrippé par l'arrière avec l'index et le majeur et, le mandrin (17) est déverrouillé par une pression du pouce sur le bouton-poussoir (18) et le couteau mélangeur (1) se laisse soulever de l'axe vertical (4).

10. Mélangeur électroménager comprenant un couteau mélangeur (1) et réalisé en tant que mélangeur en pot (2) selon l'une des revendications précédentes, **caractérisé en ce que** l'arête extérieure (20) des ailes de couteau (10, 11) forme de profil en regardant le long de l'axe vertical (4) une section circulaire.

11. Mélangeur électroménager comprenant un couteau mélangeur (1) et réalisé en tant que mélangeur en pot (2) selon l'une des revendications précédentes, **caractérisé en ce que** l'arête extérieure (20) des ailes de couteau (10, 11) est tronquée de profil regardant le long de l'axe vertical (4).

12. Mélangeur électroménager comprenant un couteau mélangeur (1) et réalisé en tant que mélangeur en pot (2) selon l'une des revendications précédentes, **caractérisé en ce que** le couteau mélangeur (1) présente une symétrie de rotation bigonale, trigonale ou tétragonale.

13. Mélangeur électroménager comprenant un couteau mélangeur (1) et réalisé en tant que mélangeur en pot (2) selon l'une des revendications précédentes, **caractérisé en ce que** le moyeu (21) de l'hélice à boucle présente un rayon faisant 15% à 30% du diamètre de l'hélice à boucle. L'invention permet de réaliser un broyage du produit à mélanger particulièrement bon.
